# EUROPEAN PATENT APPLICATION

(11) **EP 2 924 841 A1**
(43) Date of publication of application: **30.09.2015**
(21) Application number: 15160244.8
(22) Date of filing: 23.03.2015
(51) Int. Cl.: H02J 5/00, B60L 11/18, H02J 7/02, H02J 17/00

(54) **POWER SUPPLY DEVICE AND WIRELESS POWER TRANSFER DEVICE**

(30) Priority: 25.03.2014 JP 2014062734
(71) Applicant: KABUSHIKI KAISHA TOYOTA JIDOSHOKKI, Kariya-shi, Aichi 448-8671 (JP); Toyota Jidosha Kabushiki Kaisha, Toyota-shi, Aichi 471-8571 (JP)
(72) Inventor: Ono, Takuma, Kariya-shi, Aichi 448-8671 (JP); Ankyu, Tatsuya, Kariya-shi, Aichi 448-8671 (JP); Oshima, Atsushi, Kariya-shi, Aichi 448-8671 (JP); Koike, Tsuyoshi, Kariya-shi, Aichi 448-8671 (JP)
(74) Representative: TBK

(57) **Abstract**

A power supply device is capable of transferring AC power in a noncontact manner to a secondary coil of a power receiving device. The power supply device includes an AC power supply that outputs the AC power. The AC power supply includes a DC/AC conversion unit that converts DC power to the AC power, which has a predetermined frequency. A primary coil receives the AC power. A control unit controls the AC power output from the AC power supply. The control unit is configured to suspend the output of the AC power from the AC power supply or decrease the AC power based on input power, input current value, output power, or output current value of the DC/AC conversion unit and a power factor or a current difference of the input current value and the output current value.

## Description

### BACKGROUND OF THE INVENTION

The present invention relates to a power supply device and a wireless power transfer device.

Japanese Laid-Open Patent Publication No. 2009-106136 describes an example of a wireless power transfer device that does not use a power cord or power transfer cable. The wireless power transfer device includes a power supply device and a power receiving device. The power supply device includes an AC power supply, which outputs AC power having a predetermined frequency, and a primary coil that receives the AC power. The power receiving device includes a secondary coil capable of receiving the AC power from the primary coil in a noncontact manner. In the wireless power transfer device, for example, magnetic field resonance occurs at the primary coil and the secondary coil. This transfers AC power from the power supply device to the power receiving device.

The AC power supply includes, for example, a DC/AC converter that converts DC power to the AC power. If the power factor is low, the power loss of the DC/AC converter may be too high even when excessive DC power is not input to the DC/AC converter.

### SUMMARY OF THE INVENTION

It is an object of the present invention to provide a power supply device and a wireless power transfer device that reduces anomalies of the DC/AC converter.

To achieve the above object, one aspect of the present invention is a power supply device that is capable of transferring AC power in a noncontact manner to a secondary coil of a power receiving device. The power supply device includes an AC power supply that outputs the AC power. The AC power supply includes a DC/AC conversion unit that converts DC power to the AC power, which has a predetermined frequency. A primary coil receives the AC power. A control unit controls the AC power output from the AC power supply. The control unit is configured to suspend the output of the AC power from the AC power supply or decrease a value of the AC power based on input power value, input current value, output power value, or output current value of the DC/AC conversion unit and a power factor or a current difference of the input current value and the output current value.

In this configuration, output suspension of the AC power and the like is performed based on input power value, input current value, output power value, or output current value of the DC/AC conversion unit and a power factor or a current difference of the input current value and the output current value. Thus, for example, under a situation in which the power loss of the DC/AC converter is too high due to a low power factor although the input power value and the like is normal, the output of the AC power from the AC power supply is suspended or the like. This allows for anomalies of the DC/AC converter to be avoided. Thus, anomalies of the DC/AC converter may be reduced.

Preferably, the power supply device includes a meter, which measures the input power value, the input current value, the output power value, or the output current value, and a power factor detector, which detects the power factor. The control unit is configured to suspend the output of the AC power from the AC power supply or decrease the AC power if a measurement value of the meter is greater than a predetermined threshold measurement value when the power factor detected by the power factor detector is less than a predetermined threshold power factor.

This configuration suspends the output of the AC power from the AC power supply or decreases the value of the AC power if a measurement value of the meter is greater than a predetermined threshold measurement value when the power factor detected by the power factor detector is less than a predetermined threshold power factor. This reduces anomalies of the DC/AC converter.

Preferably, the control unit is configured to continuously output the AC power without changing the value of the AC power when the measurement value is less than or equal to the threshold measurement value even if the power factor is less than the threshold power factor.

When the measurement value is less than or equal to the threshold measurement value even if the power factor is less than the threshold power factor, the power loss at the DC/AC converter is relatively low. In this respect, the present configuration continuously outputs the AC power without changing the value of the AC power when the measurement value is less than or equal to the threshold measurement value even if the power factor is less than the threshold power factor. This avoids unnecessary AC power output suspension or the like under a situation in which the power loss is relatively low at the DC/AC converter.

Preferably, the threshold measurement value is a first threshold measurement value. The control unit is configured to suspend the output of the AC power from the AC power supply or decrease the value of the AC power if the power factor is greater than or equal to the threshold power factor when the measurement value is greater than a predetermined second threshold measurement value. The second threshold measurement value is set to be greater than the first threshold measurement value.

This configuration suspends the output of the AC power from the AC power supply if the power factor is greater than or equal to the threshold power factor when the measurement value is greater than a predetermined second threshold measurement value. Thus, anomalies of the DC/AC converter may be further reduced.

In particular, when the measurement value is the same, the power loss is smaller at the DC/AC converter when the power factor is lower than the threshold power factor compared to when the power factor is greater than or equal to the threshold power factor. In this respect, the present configuration sets the second threshold measurement value to be greater than the first threshold measurement value. This avoids a situation in which the output of the AC power is suspended or the like even though the power loss at the DC/AC converter is relatively low under a situation in which the power factor is greater than or equal to the threshold power factor.

To achieve the above object, a further aspect of the present invention is a wireless power transfer device including an AC power supply, a control unit, a primary coil, and a secondary coil. The AC power supply outputs AC power and includes a DC/AC converter that converts DC power to the AC power, which has a predetermined frequency. The control unit controls the AC power output from the AC power supply. The primary coil receives the AC power. The secondary coil is capable of receiving the AC power received by the primary coil in a noncontact manner. The control unit is configured to suspend the output of the AC power from the AC power supply or decrease a value of the AC power based on input power value, input current value, output power value, or output current value of the DC/AC conversion unit and a power factor or a current difference of the input current value and the output current value.

In this configuration, output suspension of the AC power and the like is performed based on input power value, input current value, output power value, or output current value of the DC/AC conversion unit and a power factor or a current difference of the input current value and the output current value. Thus, for example, under a situation in which the power loss of the DC/AC converter is too high due to a low power factor although the input power value is normal, the output of the AC power from the AC power supply is suspended or the like. This allows for anomalies of the DC/AC converter to be avoided. Thus, anomalies of the DC/AC converter may be reduced.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a block circuit diagram showing the electrical configuration of a power supply device and a wireless power transfer device according to one embodiment of the present invention;
Fig. 2 is a flowchart illustrating a suspension control process executed by primary controller shown in Fig. 1;
Fig. 3 is a graph showing the relationship of the power factor and the tolerable power value;
Fig. 4 is a graph schematically showing the relationship of the transitional effect of the input power value and the power factor;
Fig. 5 is a block circuit diagram showing a power supply device of a further example;
Fig. 6 is a flowchart illustrating a suspension control process in a further example; and
Fig. 7 is a graph illustrating a suspension range in another example.

### DETAILED DESCRIPTION OF THE PREFERRED EMBODIMENTS

One embodiment of a power supply device (power transfer device) and a wireless power transfer device (wireless power transfer system) will now be described.

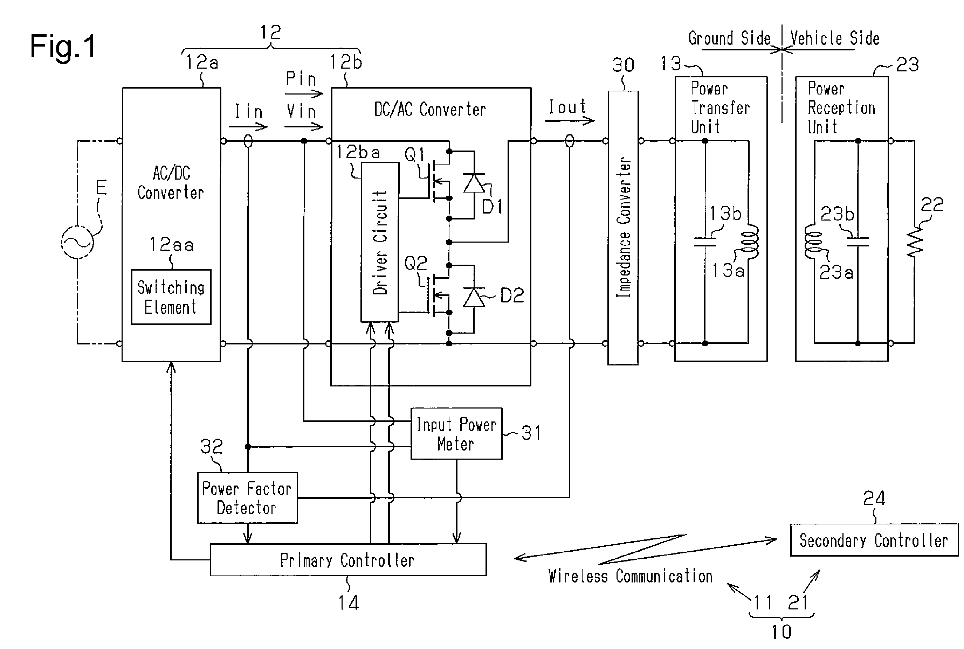

As shown in Fig. 1, a wireless power transfer device 10 includes a power supply device 11 (ground device, primary device), which is capable of transferring power in a noncontact manner, and a power receiving device 21 (vehicle device, secondary device). The power supply device 11 is arranged on ground, and the power receiving device 21 is installed in a vehicle.

The power supply device 11 includes an AC power supply 12, which is capable of outputting AC power having a predetermined frequency. The AC power supply 12, which is, for example, a voltage source, is configured to convert system power, which is received from a system power supply E serving as infrastructure, to AC power and output the converted AC power.

In detail, the AC power supply 12 includes an AC/DC converter 12a, which serves as a conversion unit that converts the system power from the system power supply E to DC power, and a DC/AC converter 12b (DC/AC conversion unit), which receives the DC power output from the AC/DC converter 12a. The DC/AC converter 12b converts the DC power to AC power and outputs the converted AC power.

The AC/DC converter 12a includes, for example, a switching element 12aa, which is cyclically activated and deactivated to output DC power. The AC/DC converter 12a is configured to variably control the duty ratio for activation and deactivation of the switching element 12aa to vary a value of the output DC power.

The DC/AC converter 12b is, for example, a class D amplifier. In detail, the DC/AC converter 12b includes a first switching element Q1 and a second switching element Q2 that are series-connected. Each of the switching elements Q1 and Q2 is, for example, an n-type power MOSFET. The drain of the first switching element Q1 is connected to a first output terminal (positive terminal) of the AC/DC converter 12a. The source of the second switching element Q2 is connected to a second output terminal (negative terminal) of the AC/DC converter 12a. The source of the first switching element Q1 is connected to the drain of the second switching element Q2. A node between the source of the first switching element Q1 and the drain of the second switching element Q2 is connected to a first output terminal of the DC/AC converter 12b. The source of the second switching element Q2 is connected to a second output terminal of the DC/AC converter 12b.

The switching elements Q1 and Q2 are alternately activated and deactivated so that the DC/AC converter 12b outputs AC power corresponding to the switching frequency of each of the switching elements Q1 and Q2. For example, when the first switching element Q1 is deactivated and the second switching element Q2 is activated or when the switching elements Q1 and Q2 are both deactivated, the DC/AC converter 12b does not output AC power. That is, the output of the AC power is suspended.

As shown in Fig. 1, the DC/AC converter 12b includes a driver circuit 12ba that separately operates the switching elements Q1 and Q2. The switching elements Q1 and Q2 are each operated in an output mode, during which AC power is output, or a suspension mode, during which the output of AC power is suspended.

The switching elements Q1 and Q2 include body diodes D1 and D2 (parasitic diodes), respectively. When the switching elements Q1 and Q2 are each operated in the output mode, current related to the generated back electromotive force transmits the body diodes D1 and D2.

The AC power output from the AC power supply 12 is transferred in a noncontact manner to the power receiving device 21 and input to a load 22 arranged in the power receiving device 21. More specifically, to transmit power between the power supply device 11 and the power receiving device 21, the wireless power transfer device 10 includes the power transfer unit 13 in the power supply device 11 and a power reception unit 23 in the power receiving device 21.

The power transfer unit 13 and the power reception unit 23 have identical structure and are configured to be capable of causing magnetic field resonance. In detail, the power transfer unit 13 includes a resonance circuit formed by a primary coil 13a and a primary capacitor 13b, which are connected in parallel. The power reception unit 23 includes a resonance circuit formed by a secondary coil 23a and a secondary capacitor 23b, which are connected in parallel. The two resonance circuits are set to have the same resonance frequency.

The node between the source of the first switching element Q1 and the drain of the second switching element Q2 is connected via a first output terminal of the DC/AC converter 12b and an impedance converter 30 (impedance conversion unit) to a first input terminal of the power transfer unit 13 (one end of the primary coil 13a). The source of the second switching element Q2 is connected via a second output terminal of the DC/AC converter 12b and the impedance converter 30 to a second input terminal of the power transfer unit 13 (other end of the primary coil 13a). The AC power output from the DC/AC converter 12b is sent via the impedance converter 30 to the power transfer unit 13.

Under a situation in which the power transfer unit 13 and the power reception unit 23 are located at relative positions that allow for magnetic field resonance, when AC power is input to the power transfer unit 13 (primary coil 13a), magnetic field resonance occurs between the power transfer unit 13 and power reception unit 23 (secondary coil 23a). As a result, the power reception unit 23 receives some of the energy from the power transfer unit 13. That is, the power reception unit 23 receives AC power from the power transfer unit 13.

The frequency of the AC power output from the AC power supply 12 (switching frequency of each of the switching elements Q1 and Q2) is set in correspondence with the resonance frequency of the power transfer unit 13 and the power reception unit 23 to enable power transfer between the power transfer unit 13 and the power reception unit 23. For example, the frequency of the AC power is set to be the same as the resonance frequency of the power transfer unit 13 and the power reception unit 23. The configuration is not limited to this and may adopt the structure in which the frequency of the AC power differs from the resonance frequency of the power transfer unit 13 and the power reception unit 23 in a range enabling power transfer.

The load 22, which receives the AC power received by the power reception unit 23, includes, for example, a rectifier (AC/DC conversion unit) and a vehicle battery, which receives DC power rectified by the rectifier. The AC power received by the power reception unit 23 is used to charge the vehicle battery.

The power supply device 11 includes a primary controller 14 (control unit) that controls the AC/DC converter 12a, the DC/AC converter 12b (more specifically, the driver circuit 12ba), and the like.

In detail, when starting the output of AC power, the primary controller 14 transmits, to the AC/DC converter 12a, an output instruction signal including power value information, which is related to the value of the DC power. Based on the output instruction signal, the AC/DC converter 12a cyclically activates and deactivates the switching element 12aa with a duty ratio corresponding to the power value information. As a result, the AC/DC converter 12a outputs DC power having the value of the power value information.

When suspending the output of the AC power, the primary controller 14 transmits a suspension instruction signal to the AC/DC converter 12a. Based on the suspension instruction signal, the AC/DC converter 12a causes the switching element 12aa to be into a state (for example, deactivated state) that does not allow for the AC/DC converter to output the DC power.

The primary controller 14 transmits, to the driver circuit 12ba, a pulse signal and an instruction signal, which instructs the operation mode. When the operation mode instructed by the instruction signal is the output mode, the driver circuit 12ba alternately activates and deactivates the switching elements Q1 and Q2 at the frequency of the input pulse signal. When the operation mode instructed by the instruction signal is the suspension mode, the driver circuit 12ba, for example, deactivates the first switching element Q1 and activates the second switching element Q2 or deactivates both of the switching elements Q1 and Q2.

The power receiving device 21 includes a secondary controller 24, which is capable of performing wireless communication with the primary controller 14. The wireless power transfer device 10 starts or ends power transfer through the exchange of information between the controllers 14 and 24.

As shown in Fig. 1, the power supply device 11 includes the impedance converter 30, which converts impedance, between the AC power supply 12 (more specifically, the DC/AC converter 12b) and the power transfer unit 13. The impedance converter 30 includes, for example, a transformer and an LC circuit.

A power supply load may be formed from the input terminal of the impedance converter 30 (output terminal of DC/AC converter 12b) to the load 22. In this case, assuming a power factor A relative to the power supply load when the AC power output from the AC power supply 12 (DC/AC converter 12a) has a predetermined specified power value Pt, the impedance converter 30 converts the input impedance of the power transfer unit 13 (primary coil 13a) so that the power factor A relative to the power supply load approaches (preferably, conforms to) "1". In other words, the impedance of the impedance converter 30 is set so that the power factor A approaches (preferably, conforms to) "1" when the AC power supply 12 outputs AC power having the specified power value Pt. That is, the impedance converter 30 of the present embodiment functions as a power factor improvement circuit. The power factor A corresponds to a phase difference of the output voltage and output current of the DC/AC converter 12b (AC power supply 12). When the power factor A approaches "1", this is equivalent to the phase difference approaching "0".

The primary controller 14 causes the AC power supply 12 to output AC power having the specified power value Pt by transmitting the output instruction signal, which includes power value information of the specified power value Pt, to the AC/DC converter 12a and transmitting an instruction signal of the output mode and a pulse signal to the driver circuit 12ba.

When the power factor A becomes low (poor), the power loss (burden) of the DC/AC converter 12b (specifically, the switching elements Q1 and Q2) increases. Thus, even if the input power value Pin, which is the value of the power input to the DC/AC converter 12b is normal, when the power factor λ is too low, the power loss of the switching elements Q1 and Q2 becomes too high, and an anomaly may occur in the DC/AC converter 12b.

In this regard, the power supply device 11 (wireless power transfer device 10) of the present embodiment includes a structure for limiting excessive increases in the power loss of the DC/AC converter 12b. The structure will now be described in detail.

As shown in Fig. 1, the power supply device 11 includes an input power meter 31, which measures the input power value Pin of the DC/AC converter 12b. The input power meter 31 measures an input voltage value Vin and an input current value lin of the DC/AC converter 12b to calculate the input power value Pin from the measurement result. The input power value Pin of the DC/AC converter 12b may be referred to as the output power value of the AC/DC converter 12a.

The power supply device 11 includes a power factor detector 32 that detects the power factor A. The power factor detector 32 measures the input current value lin of the DC/AC converter 12b and the output current value lout of the DC/AC converter 12b and obtains the power factor λ from the two values. In detail, the power factor λ is the quotient of the input current value lin with respect to the output current value lout (lin/lout). The output current value lout is, for example, an effective value.

Referring to Fig. 1, the input power meter 31 transmits information related to the measured input power value Pin to the primary controller 14. In the same manner, the power factor detector 32 transmits information related to the power factor λ to the primary controller 14.

When AC power is output from the AC power supply 12, the primary controller 14 periodically performs based on the input power value Pin and the power factor λ a suspension control process that includes a control for suspending the output of the AC power. The suspension control process will now be described in detail.

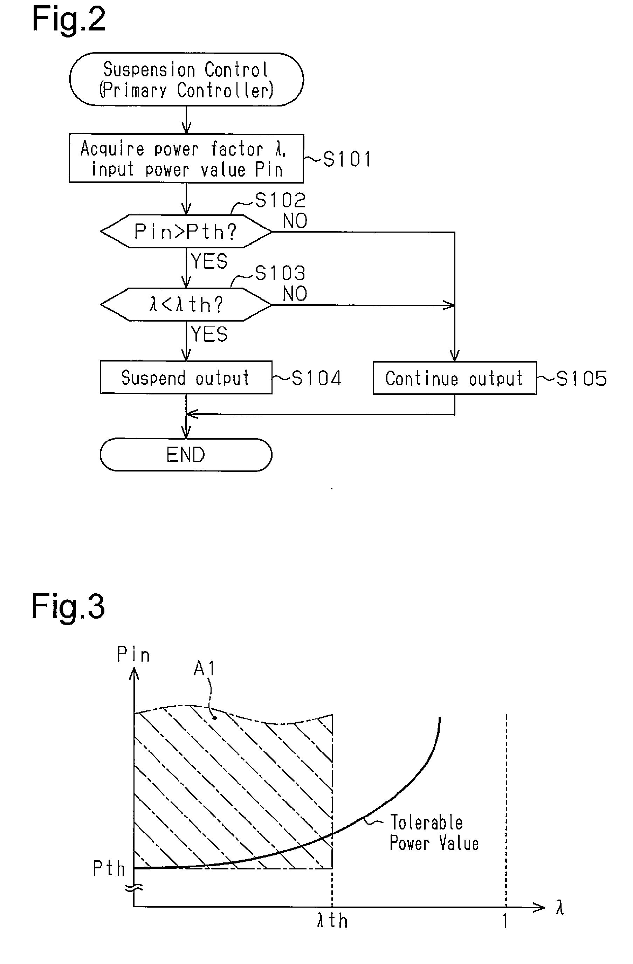

Referring to Fig. 2, at first, in step S101, the primary controller 14 acquires the present power factor λ and the present input power value Pin from the detection result of the power factor detector 32 and the measurement result of the input power meter 31.

In step S102, the primary controller 14 determines whether or not the input power value Pin is greater than a threshold input power value Pth, which serves as a predetermined threshold measurement value.

A tolerable power value is set as an upper limit value of the input power value Pin in which the DC/AC converter 12b may be normally operated or a value including a predetermined margin from the upper limit value. The tolerable power value is a parameter that is dependent on the power factor A. In this case, the threshold input power value Pth is, for example, a minimum value of the tolerable power value that varies in accordance with the power factor A. The threshold input power value Pth may be any value.

When the input power value Pin is greater than a threshold input power value Pth, the primary controller 14 proceeds to step S103 and determines whether or not the power factor λ is less than a predetermined threshold power factor λth.

When the power factor λ is less than the threshold power factor λth, the primary controller 14 proceeds to step S104, performs an output suspension process to suspend the output of the AC power, and then ends the suspension control process. In detail, the primary controller 14 transmits a suspension instruction signal to the AC/DC converter 12a and transmits a suspension mode instruction signal to the driver circuit 12ba of the DC/AC converter 12b. That is, the primary controller 14 suspends the output of the AC power when the input power value Pin is greater than the threshold input power value Pth and the power factor λ is less than threshold power factor λth (step S102: YES, step S103: YES).

When the input power value Pin is less than or equal to the threshold input power value Pth (step S102: NO), the primary controller 14 proceeds to step S105. Even if the input power value is greater than the threshold input power value Pth, the primary controller 14 proceeds to step S105 when the power factor λ is greater than or equal to the threshold power factor λth (step S102: YES, step S103: NO). In step S105, the primary controller 14 performs an output continuation process to continue the output of the AC power without changing the value of the AC power and ends the suspension control process.

The operation of the present embodiment will now be described with reference to Fig. 3. Fig. 3 is a graph showing the relationship of the power factor λ and the tolerable power value of the DC/AC converter 12b.

As shown in Fig. 3, the tolerable power value increases as the power factor λ becomes higher. The dashed lines in Fig. 3 show a suspension range A1 in which the power factor λ is less than the threshold power factor λth and the input power value Pin is greater than the threshold input power value Pth. In the suspension range A1, the output of the AC power is suspended. When the power factor λ is greater than or equal to the threshold power factor λth or the input power value Pin is less than or equal to the threshold input power value Pth, the output of the AC power is continued without changing the power value.

The present embodiment has the advantages described below.

(1) The power supply device 11 includes the AC power supply 12, which includes the DC/AC converter 12b that converts DC power to AC power, and the power transfer unit 13 (primary coil 13a), which receives the AC power. The power supply device 11 also includes the primary controller 14 that suspends the output of the AC power based on the input power value Pin and power factor λ of the DC/AC converter 12b. In detail, the power supply device 11 includes the input power meter 31, which measures the input power value Pin, and the power factor detector 32, which detects the power factor A. The primary controller 14 suspends the output of the AC power if the input power value Pin measured by the input power meter 31 is greater than the threshold input power value Pth when the power factor λ detected by the power factor detector 32 is less than the threshold power factor λth. This limits excessive power loss of the DC/AC converter 12b that may be caused when the power factor λ is low even if the input power value Pin is normal.

(2) Even when the power factor λ is lower than the threshold power factor λth, if the input power value Pin is less than or equal to the threshold input power value Pth, the primary controller 14 continues to output the AC power without changing the value of the AC power. Even when the power factor λ is lower than the threshold power factor λth, if the input power value Pin is less than or equal to the threshold input power value Pth, the power loss of the DC/AC converter 12b is relatively small. Thus, in the present configuration, the output of the AC power is continued without changing the value of the AC power. This avoids a situation in which the output of AC power is suspended even though the power loss of the DC/AC converter 12b is relatively small (normal). A situation in which the power loss of the DC/AC converter 12b is relatively small (normal) is a situation in which the DC/AC converter 12b functions normally.

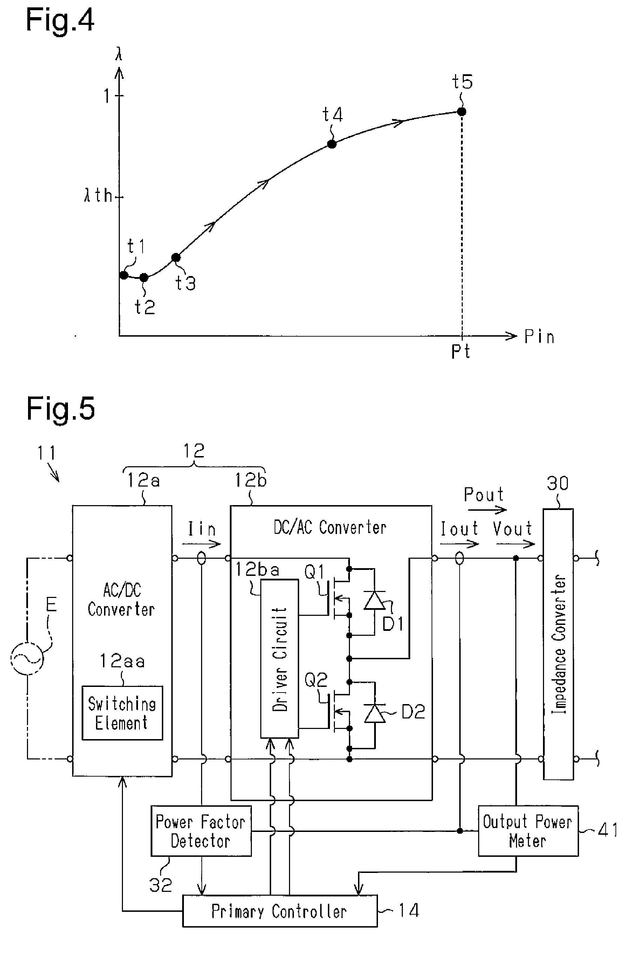

The present configuration is able to cope with a transitional effect of the input power value. This advantage will be described with reference to Fig. 4, which is a graph schematically showing changes in the input power value Pin and the power factor λ from when the primary controller 14 instructs the output of AC power having the specified power value Pt. Fig. 4 plots the power factor λ and the input power value Pin at timings t1 to t5.

As shown in Fig. 4, when the primary controller 14 issues an instruction for the output of AC power having the specified power value Pt to the AC/DC converter 12a and the DC/AC converter 12b, the input power value Pin gradually increases as time elapses.

As described above, the impedance converter 30 of the power supply device 11 is configured so that the power factor λ approaches "1" when AC power having the specified power value Pt is output. Thus, when the input power value Pin is small, that is, when sufficient time has not elapsed from the timing at which the primary controller 14 issued an output instruction, the power factor λ is low and increases as the input power value Pin increases. Thus, if the output of the AC power is suspended regardless of the input power value Pin when the power factor λ is lower than the threshold power factor λ, this results in a drawback in which the output of the AC power is suspended before the input power value Pin reaches the specified power value Pt.

In this regard, in the present embodiment, as long as the input power value Pin is less than or equal to the threshold input power value Pth, the output of the AC power is continued without changing the value of the AC power even when the power factor λ is lower than the threshold power factor A. Thus, the drawback described above may be avoided.

(3) When the power factor λ is greater than or equal to the threshold power factor λ, the primary controller 14 continues to output the AC power regardless of the input power value Pin. This allows for efficient power input to the power supply load.

(4) The tolerable power value is set as an upper limit value of the input power value Pin in which the DC/AC converter 12b may be normally operated or a value including a predetermined margin from the upper limit value. The tolerable power value is a parameter that is dependent on the power factor A. In this case, the threshold input power value Pth is set as the minimum value of the tolerable power value that varies in accordance with the power factor A. This limits the input power value Pin at the tolerable power value regardless of how the power factor A changes.

It should be apparent to those skilled in the art that the present invention may be embodied in many other specific forms without departing from the spirit or scope of the invention. Particularly, it should be understood that the present invention may be embodied in the following forms.

- In step S102, the input power value Pin does not have to be used. For example, as shown in Fig. 5, the power supply device 11 may include an output power meter 41 that measures the output power value Pout of the DC/AC converter 12b. The output power meter 41 measures the output voltage value Vout and output current value lout of the DC/AC converter 12b and calculates the output power value Pout from these values. Further, the output power meter 41 transmits the calculated output power value Pout to the primary controller 14. In step S102, the primary controller 14 determines whether or not the output power value Pout measured by the output power meter 41 is greater than a predetermined threshold output power value. This configuration also has advantages (1) and the like described above. The output voltage value Vout and the output power value Pout are, for example, effective values.

Further, in step S102, the input current value lin or the output current value lout may be used instead of the input power value Pin. In this case, the measurement of the input voltage value Vin or the output voltage value Vout of the DC/AC converter 12b and the calculation of the input power value Pin or the output power value Pout may be omitted. This allows for a simplified configuration.

The power supply device 11 need only include a meter that measures the input power value Pin, the input current value lin, the output power value Pout, or the output current value lout of the DC/AC converter 12b so that the primary controller 14 may compare the measurement value of the meter with a threshold value. In this case, the threshold value subject to comparison may be changed in accordance with the measurement subject. The tolerable value allowing for normal operation of the DC/AC converter 12b (e.g., tolerable power value or tolerable current value) is changed in accordance with the measurement subject.

- The power supply device 11 may include a meter for measuring at least two of the input power value Pin, the input current value lin, the output power value Pout, and the output current value lout of the DC/AC converter 12b. In this case, the primary controller 14 may determine whether or not to suspend the output of the AC power based on the at least two measurement results.

- The power factor λ does not have to be used in step S103. For example, the current difference of the input current value lin and the output current value lout may be used instead of the power factor λ. In this case, the power supply device 11 may include a current difference detector, which detects the current difference, instead of (or in addition to) the power factor detector 32. Further, in step S103, the primary controller 14 determines whether or not the current difference detected by the current difference detector is greater than a predetermined threshold current difference. When the current difference is greater than the threshold current difference, the primary controller 14 performs the output suspension process in step S104. When the current difference is less than or equal to the threshold current difference, the primary controller 14 performs the output continuation process in step S105.

Further, instead of the power factor detector 32, the power supply device 11 may include a phase difference detector that detects the phase difference between the output voltage and the output current of the DC/AC converter 12b. In this case, in step S103, the primary controller 14 may determine whether or not the phase difference is greater than a predetermined threshold phase difference (e.g., phase difference corresponding to threshold power factor λth).

In summary, the determination process of step S103 uses a physical quantity related to the phase difference between the output voltage and the output current of the DC/AC converter 12b. In detail, it is preferable that the determination process of step S103 uses a parameter that easily varies (has a large variation amount) in a relative manner with respect to the phase difference between the output voltage and the output current of the DC/AC converter 12b but does not easily vary (has a small variation amount) with respect to other parameters (e.g., output power value Pout).

- Instead of the output suspension process of step S104, the primary controller 14 may perform a process that decreases the value of the AC power. In detail, for example, the primary controller 14 may transmit, to the AC/DC converter 12a, an output instruction signal including power value information setting a value for DC power that is smaller than the value of the present DC power. This also allows for reduction in the power loss of the DC/AC converter 12b.

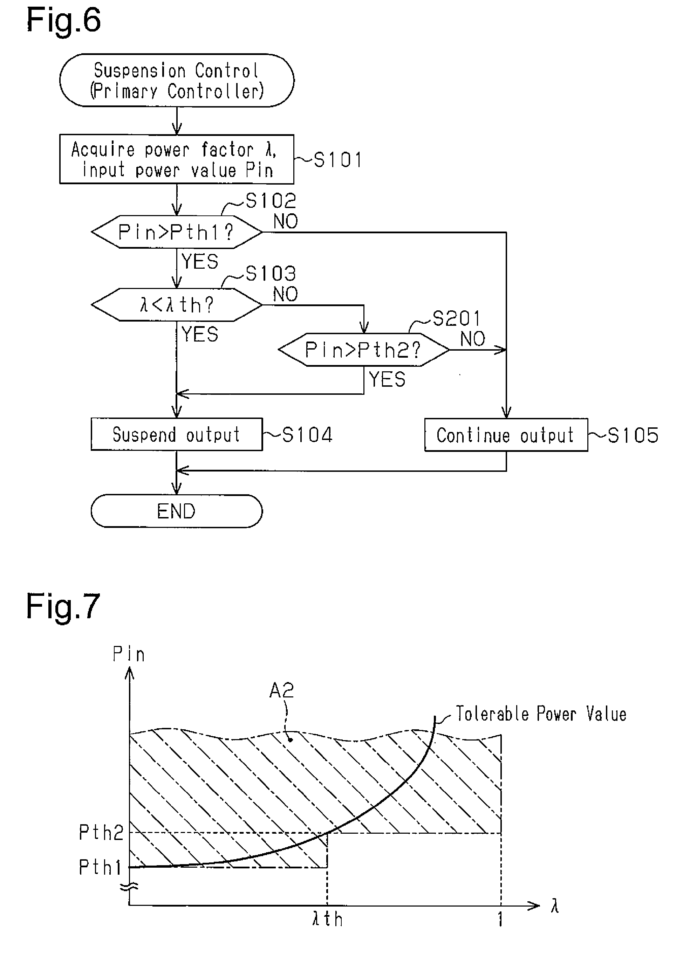

- In the above embodiment, when the power factor λ is greater than or equal to the threshold power factor λth, the output of the AC power is continued without changing the value of the AC power regardless of the input power value Pin. Instead, for example, as shown in Fig. 6, the threshold input power value Pth used in the determination process of step S102 is set as a first threshold input power value Pth1 (first threshold measurement value). When producing a negative determination in step S103, the primary controller 14 determines in step S201 whether or not the input power value Pin is greater than a second threshold input power value Pth2 (second threshold measurement value). The second threshold input power value Pth2 is set to be greater than the first threshold input power value Pth1. In detail, the second threshold input power value Pth2 is set to a tolerable power value for when the power factor λ is the threshold power factor λth. When the input power value Pin is greater than the second threshold input power value Pth2, the primary controller 14 proceeds to step S104. When the input power value Pin is less than or equal to the second threshold input power value Pth2, the primary controller 14 proceeds to step S105.

In this configuration, as shown in Fig. 7, the suspension range A2 of the present example is larger than the suspension range A1 of the embodiment. In detail, even if the power factor λ is greater than or equal to the threshold power factor λth, the output of the AC power is suspended as long as the input power value Pin is greater than the second threshold input power value Pth2. This further reduces anomalies of the DC/AC converter 12b.

In particular, the second threshold input power value Pth2 is set to be greater than the first threshold input power value Pth1. Thus, the output of the first AC power is easily continued compared to a configuration that suspends the output of the AC power regardless of the power factor λ when the input power value Pin is greater than the first threshold input power value Pth1. This reduces unnecessary AC power output suspensions.

In this example, the primary controller 14 may perform step S103 after step S101. In this case, when a negative determination is given in step S103, the primary controller 14 proceeds to step S102.

- The input power meter 31 and the power factor detector 32 may be included in the primary controller 14.

- DC power having a predetermined power value may be input as the external power. In this case, the AC/DC converter 12a may be omitted. Alternatively, a DC/DC converter may be used in lieu of the AC/DC converter 12a. In this example, the DC/DC converter corresponds to the conversion unit.

- There may be more than one impedance converter 30. Alternatively, the impedance converter 30 may be omitted.

- The DC/AC converter 12b may have any configuration. For example, the DC/AC converter 12b may be a class E amplifier including a single switching element. Alternatively, the DC/AC converter 12b may be a bridge circuit including four switching elements.

- The AC/DC converter 12a may have any configuration. Further, the AC/DC converter 12a may be configured in a manner that the value of the DC power cannot be varied. Moreover, the AC/DC converter 12a may be of a type that increases the voltage or a type that increases and decreases the voltage.

- The switching elements Q1 and Q2 are power MOSFETs. Instead, the switching elements Q1 and Q2 may each be an insulated gate bipolar transistor (IGBT) or the like. Further, instead of the body diodes D1 and D2, two separate diodes may be connected in parallel to the switching elements Q1 and Q2. The diodes connected in parallel to the switching elements Q1 and Q2 may be incorporated in the switching elements Q1 and Q2 or be arranged separately from the switching elements Q1 and Q2.

- At the timing between the activation and the deactivation of the switching elements Q1 and Q2, a dead time may be provided during which the switching elements Q1 and Q2 are both deactivated.

- Any configuration may be used to suspend the output of the AC power. For example, a contactor may be arranged in the power transfer line in front of or behind the AC/DC converter 12a, and the primary controller 14 may switch the contactor from the activation state to the deactivation state.

- The subject that performs the suspension control process does not have to be the primary controller 14. For example, the secondary controller 24 may perform the suspension control process. In this case, the primary controller 14 may transmit information used to perform the suspension control process to the secondary controller 24. Further, the secondary controller 24 may send various instructions to the primary controller 14 when necessary so that the primary controller 14 controls the DC/AC converter 12b or the AC/DC converter 12a in accordance with the instructions.

- The AC power supply 12 is not limited to a voltage source and may be a power source or a current source.

- Although the power transfer unit 13 and the power reception unit 23 are set to have the same resonance frequency, the power transfer unit 13 and the power reception unit 23 may have different resonance frequencies set in a range enabling power transfer.

- Although the power transfer unit 13 and the power reception unit 23 have the same configuration, the power transfer unit 13 and the power reception unit 23 may have different configurations.

- The capacitors 13b and 23b may be omitted. In this case, parasitic capacitances of the coils 13a and 23a are used to cause magnetic field resonance.

- The power receiving device 21 may be installed in any device. For example, the power receiving device 21 may be installed in a robot or a motor-driven wheelchair.

- In the above embodiment, the primary coil 13a and the primary capacitor 13b are connected in parallel. Instead, the primary coil 13a and the primary capacitor 13b may be connected in series. Similarly, the secondary coil 23a and the secondary capacitor 23b may be connected in series.

- In the above embodiment, magnetic field resonance is used to perform wireless power transfer. Instead, electromagnetic induction may be used.

- In the above embodiment, the AC power received by the power reception unit 23 is used to charge a vehicle battery. Instead, the AC power may be used for other purposes.

- The power transfer unit 13 may include a resonance circuit, which includes the primary coil 13a and the primary capacitor 13b, and a primary coupling coil, which is coupled to the resonance circuit through electromagnetic induction. In the same manner, the power reception unit 23 may include a resonance circuit, which includes the secondary coil 23a and the secondary capacitor 23b, and a secondary coupling coil, which is coupled to the resonance circuit through electromagnetic induction.

The present examples and embodiments are to be considered as illustrative and not restrictive, and the invention is not to be limited to the details given herein, but may be modified within the scope and equivalence of the appended claims.

A power supply device is capable of transferring AC power in a noncontact manner to a secondary coil of a power receiving device. The power supply device includes an AC power supply that outputs the AC power. The AC power supply includes a DC/AC conversion unit that converts DC power to the AC power, which has a predetermined frequency. A primary coil receives the AC power. A control unit controls the AC power output from the AC power supply. The control unit is configured to suspend the output of the AC power from the AC power supply or decrease the AC power based on input power, input current value, output power, or output current value of the DC/AC conversion unit and a power factor or a current difference of the input current value and the output current value.

## Claims

1. A power supply device that is capable of transferring AC power in a noncontact manner to a secondary coil (23a) of a power receiving device (21), the power supply device comprising:
an AC power supply (12) that outputs the AC power, wherein the AC power supply (12) includes a DC/AC conversion unit (12b) that converts DC power to the AC power, which has a predetermined frequency;
a primary coil (13a) that receives the AC power; and
a control unit (14) that controls the AC power output from the AC power supply (12),
**characterized in that** the control unit (14) is configured to suspend the output of the AC power from the AC power supply (12) or decrease a value of the AC power based on input power value, input current value, output power value, or output current value of the DC/AC conversion unit (12b) and a power factor or a current difference of the input current value and the output current value.

2. The power supply device according to claim 1, **characterized by**:
a meter (31) that measures the input power value, the input current value, the output power value, or the output current value; and
a power factor detector (32) that detects the power factor;
wherein the control unit (14) is configured to suspend the output of the AC power from the AC power supply (12) or decrease the value of the AC power if a measurement value of the meter (31) is greater than a predetermined threshold measurement value when the power factor detected by the power factor detector (32) is less than a predetermined threshold power factor.

3. The power supply device according to claim 2, **characterized in that** the control unit is configured to continuously output the AC power without changing the value of the AC power when the measurement value is less than or equal to the threshold measurement value even if the power factor is less than the threshold power factor.

4. The power supply device according to claim 2 or 3, **characterized in that**
the threshold measurement value is a first threshold measurement value;
the control unit (14) is configured to suspend the output of the AC power from the AC power supply (12) or decrease the value of the AC power if the power factor is greater than or equal to the threshold power factor when the measurement value is greater than a predetermined second threshold measurement value; and
the second threshold measurement value is set to be greater than the first threshold measurement value.

5. The power supply device according to claim 2 or 3, **characterized in that** the control unit (14) is configured to continue the output of the AC power from the AC power supply (12) without changing the value of the AC power when the power factor is greater than or equal to the threshold power factor.

6. The power supply device according to any one of claims 1 to 5, **characterized by** an impedance conversion unit (30) that converts impedance, wherein the impedance conversion unit is located between the AC power supply (12) and the primary coil (13a), and the impedance conversion unit (30) converts an input impedance of the primary coil (13a) so that the power factor approaches 1 when the AC power output from the AC power supply (12) has a predetermined specified value.

7. The power supply device according to any one of claims 1 to 6, **characterized in that** the AC power supply (12) further includes a conversion unit (12a) that converts external power to the DC power and is capable of changing a value of the DC power.

8. The power supply device according to any one of claims 1 to 7, **characterized in that**
the DC/AC conversion unit (12b) includes a first switching element (Q1) and a second switching element (Q2) that are connected in series, and
the DC/AC conversion unit (12b) outputs the AC power by alternately activating and deactivating the first switching element (Q1) and the second switching element (Q2).

9. A wireless power transfer device comprising:
an AC power supply (12) that outputs AC power, wherein the AC power supply (12) includes a DC/AC conversion unit (12b) that converts DC power to the AC power, which has a predetermined frequency;
a control unit (14) that controls the AC power output from the AC power supply (12);
a primary coil (13a) that receives the AC power; and
a secondary coil (23a) capable of receiving the AC power received by the primary coil (13a) in a noncontact manner,
**characterized in that** the control unit (14) is configured to suspend the output of the AC power from the AC power supply (12) or decrease a value of the AC power based on input power value, input current value, output power value, or output current value of the DC/AC conversion unit (12b) and a power factor or a current difference of the input current value and the output current value.
